# EUROPÄISCHE PATENTSCHRIFT

(11) **EP 2 085 335 B1**
(45) Veröffentlichungstag und Bekanntmachung des Hinweises auf die Patenterteilung: **26.10.2011**
(21) Anmeldenummer: 08001605.8
(22) Anmeldetag: 29.01.2008
(51) Int. Cl.: B65G 23/44

(54) **Fördervorrichtung mit einem spannbaren Fördermittel sowie Verfahren zum Spannen des Fördermittels**
Conveyor device with a tensionable conveyor device and method for tensing the conveyor device
Dispositif d'acheminement doté d'un moyen d'acheminement étirable et procédé de tension du moyen d'acheminement

(43) Veröffentlichungstag der Anmeldung: 05.08.2009
(73) Patentinhaber: TRUMPF Maschinen Grüsch AG, 7214 Grüsch (CH)
(72) Erfinder: Schweizer, Werner, 7307 Jenins (CH); Steinhart, Gerhard, 8890 Flums (CH)
(74) Vertreter: Kohler Schmid Möbus

(56) Entgegenhaltungen:
- DE-A1- 10 351 657
- GB-A- 693 366
- US-A- 4 995 506
- US-A- 5 054 608

## Beschreibung

Die Erfindung betrifft eine Fördervorrichtung
- mit einem spannbaren Fördermittel, das angetrieben bewegbar ist,
- mit einer Spannvorrichtung zum Spannen des Fördermittels, die einen Fördermittelspanner sowie eine Zustellvorrichtung hierfür umfasst, wobei der Fördermittelspanner in Richtung auf das Fördermittel schwimmend gelagert und zum Spannen des Fördermittels mittels der Zustellvorrichtung mit einer Spannbewegung in der Richtung seiner schwimmenden Lagerung zustellbar ist sowie
- mit einer Rückstellsperre, mittels derer der Fördermittelspanner gegen eine Bewegung in Gegenrichtung seiner schwimmenden Lagerung gesperrt ist.

Die Erfindung betrifft des Weiteren ein Verfahren zum Spannen eines spannbaren und angetrieben bewegbaren Fördermittels einer Fördervorrichtung,
- wobei ein in Richtung auf das Fördermittel schwimmend gelagerter Fördermittelspanner zum Spannen des Fördermittels mit einer Spannbewegung in der Richtung seiner schwimmenden Lagerung zugestellt wird und
- wobei der Fördermittelspanner gegen eine Bewegung entgegen der Richtung seiner schwimmenden Lagerung gesperrt wird.

DE 103 51 657 A1 offenbart einen Förderer, der beispielsweise an Werkzeugmaschinen eingesetzt wird. Als Fördermittel weist der vorbekannte Förderer eine Förderkette auf, die über eine Umlenkwelle läuft. Die Umlenkwelle ist an einem Schlitten vorgesehen, der an einem Gehäuse des Förderers in Richtung auf die Förderkette schwimmend gelagert ist. Zur Erzeugung der erforderlichen Kettenspannung und damit insbesondere auch zum Nachspannen der Förderkette im Falle einer verschleißbedingten Kettenlängung wird der Schlitten bzw. die an diesem gelagerte Umlenkwelle mittels zweier an dem Gehäuse des Förderers abgestützter Federelemente permanent gegen die Förderkette vorgespannt. Die von den Federelementen aufgebrachte Vorspannkraft muss ihrem Betrag nach diejenige Kraft übersteigen, die während des Betriebes des Förderers von der Förderkette entgegen der Vorspannung auf die Umlenkwelle und den mit dieser versehenen Schlitten ausgeübt wird.

Aus US 4,995,506 A ist eine gattungsgemäße Fördervorrichtung mit einem endlosen Fördermittel sowie mit einer Spannvorrichtung für das Fördermittel bekannt. An der Spannvorrichtung gleitet das Fördermittel über eine in Laufrichtung des Fördermittels ortsfeste Fördermittelführung. Die Fördermittelführung ist an einem Schlitten angebracht, der seinerseits durch eine Spannfeder in Richtung auf das Fördermittel gedrückt wird. In Gegenrichtung wird der Schlitten durch ein Gesperre blockiert. Das Gesperre dient dazu, die Fördermittelspannung aufrechtzuerhalten, wenn die Bewegungsrichtung des Fördermittels umgekehrt wird. Mit einer derartigen Laufrichtungsumkehr ist eine Belastung des mit der Fördermittelführung versehenen Schlittens verbunden, welche der Wirkung der Spannfeder entgegengerichtet ist und welche die von der Spannfeder ausgeübte Spannkraft betragsmäßig übersteigt. Das Spannen des Fördermittels erfolgt im laufenden Betrieb. Die zum Spannen des Fördermittels benötigte Kraft wird durch die Spannfeder aufgebracht, die daher derart ausgelegt sein muss, dass sie die von dem Fördermittel entgegen der Spannrichtung ausgeübte Kraft überwinden kann.

Ausgehend von dem gattungsgemäßen Stand der Technik hat es sich die Erfindung zum Ziel gesetzt, eine Fördervorrichtung mit einem spannbaren Fördermittel sowie ein Verfahren zum Spannen eines derartigen Fördermittels bereitzustellen, im Falle derer sich eine hinreichende Fördermittelspannung unter Aufbringen einer lediglich geringen Spannkraft einstellt.

Erfindungsgemäß gelöst wird diese Aufgabe durch die Fördervorrichtung gemäß Patentanspruch 1 sowie durch das Verfahren gemäß Patentanspruch 10.

Erfindungsgemäße Rotationselemente üben an derjenigen Seite, an welcher das Fördermittel auf das Rotationselement aufläuft, eine Zugkraft auf das Fördermittel aus. An der Ablaufseite des Rotationselementes wird das Fördermittel in seine Bewegungsrichtung gedrückt. Gleichzeitig wirkt auf das von dem Rotationselement ablaufende Fördermittel eine der Bewegung des Fördermittels entgegengerichtete Kraft, insbesondere eine entsprechende Reibkraft. Besitzt das Fördermittel eine gewisse Flexibilität quer zu seiner Bewegungsrichtung, so kommt es infolge der beschriebenen Kraftverhältnisse an der Ablaufseite des Rotationselementes zu einer Wellung des sich in seiner Bewegungsrichtung bewegenden Fördermittels.

Im Falle der Erfindung wird zum Spannen bzw. zum Nachspannen des Fördermittels zunächst der Fördermittelspanner von einer Beaufschlagung durch das Fördermittel, welche einer Spannbewegung des Fördermittelspanners entgegenwirkt, vollständig oder teilweise entlastet. Nach einer derartigen Entlastung reicht eine verhältnismäßig kleine Kraft aus, um den Fördermittelspanner mit einer Spannbewegung in Richtung seiner schwimmenden Lagerung zuzustellen.

Wird das zum Antrieb des Fördermittels dienende Rotationselement zur Entlastung von dem Fördermittel stillgesetzt, so bedarf es lediglich einer geringen, von der Zustellvorrichtung aufzubringenden Kraft, um das gleichzeitig als Fördermittelspanner dienende Rotationselement mit einer Spannbewegung zu verlagern. Bei dieser Spannbewegung wird die zuvor gebildete Wellung des Fördermittels geglättet. Dies ist mit geringem Kraftaufwand möglich.

Wird zur Entlastung des Rotationselementes von dem Fördermittel die anfängliche Drehrichtung des zum Antrieb dienenden Rotationselementes umgekehrt, so rollt das zum Spannen des Fördermittels eingesetzte Rotationselement an der Unterseite des Fördermittels ab und bewegt sich dadurch in Richtung der Spannbewegung, bis die Wellung des Fördermittels geglättet ist. Durch das Abrollen des Rotationselementes an dem Fördermittel wird die Zustellvorrichtung unterstützt. Infolgedessen minimiert sich die Kraft, die zum Spannen des Fördermittels von der Zustellvorrichtung auf den Fördermittelspanner, d.h. auf das betreffende Rotationselement auszuüben ist.

Um zu verhindern, dass sich der mit einer Spannbewegung zugestellte Fördermittelspanner aufgrund einer sich an die Entlastung anschließenden erneuten Beaufschlagung durch das Fördermittel in die Ausgangsposition der Spannbewegung zurückstellt, ist die anspruchsgemäße Rückstellsperre vorgesehen, welche den Fördermittelspanner an einer unerwünschten Rückstellbewegung der genannten Art hindert. Außerdem sorgt die Rückstellsperre insbesondere auch dafür, dass an dem Fördermittelspanner auftretende und beispielsweise durch das sich bewegende Fördermittel verursachte Erschütterungen keine Wirkung auf die Zustellvorrichtung ausüben. Dadurch wird insbesondere ein Aufschwingen des Fördermittelspanners verhindert, wie es ansonsten bei einer wechselseitigen diskontinuierlichen Beaufschlagung des Fördermittelspanners durch das Fördermittel einerseits und durch die Zustellvorrichtung andererseits denkbar wäre. Im Sinne der Vermeidung eines Aufschwingens des Fördermittelspanners wirkt sich im Übrigen auch der Umstand aus, dass aufgrund des erfindungsgemäßen Konzeptes die von der Zustellvorrichtung zum Spannen des Fördermittels auf diese ausgeübte Kraft erheblich kleiner ist als diejenigen Kräfte, die bei Betrieb der Fördervorrichtung seitens des Fördermittels in den Fördermittelspanner eingeleitet werden. Aufgrund der Verwendung eines Rotationselementes als Fördermittelspanner minimiert sich der Bewegungswiderstand, der von dem Fördermittelspanner der Bewegung des Fördermittels entgegengesetzt wird. Als Rotationselemente in Frage kommen beispielsweise Kettensterne als Fördermittelspanner für Förderketten oder Spannrollen als Fördermittelspanner für Bandförderer.

Besondere Ausführungsarten der erfindungsgemäßen Vorrichtung nach Patentanspruch 1 sowie des erfindungsgemäßen Verfahrens nach Patentanspruch 10 ergeben sich aus den abhängigen Patentansprüchen 2 bis 9 bzw. aus dem abhängigen Patentanspruch 11.

In bevorzugter Ausgestaltung der Erfindung bildet das als Fördermittelspanner vorgesehene Rotationselement ein rotierendes Umlenkelement aus, mittels dessen das zu spannende Fördermittel umgelenkt wird (Patentansprüche 2, 11).

Ausweislich Patentanspruch 3 umfasst im Falle einer weiteren Ausführungsform der Erfindung die Zustellvorrichtung wenigstens eine Druckfeder, vorzugsweise wenigstens eine Gasdruckfeder. Derartige Federn bieten eine dauerhaft funktionssichere Möglichkeit zum Antrieb des Fördermittelspanners bei dessen Spannbewegung. Es sind Federn mit Federkennlinien verfügbar, die optimal auf den Einsatzzweck abgestimmt sind.

Im Falle der Erfindungsbauart nach Patentanspruch 4 ist der Fördermittelspanner mittelbar, nämlich über einen Träger, an einer Tragstruktur der Fördervorrichtung in Richtung der Spannbewegung geführt und schwimmend gelagert. In den erfindungsgemäßen Träger lassen sich unterschiedliche Funktionen der Gesamtanordnung integrieren.

Die in Patentanspruch 5 beschriebene Ausführungsform der Erfindung zeichnet sich durch eine besonders exakte Führung des Fördermittelspanners an der Tragstruktur der Fördervorrichtung aus. Durch die Verwendung zweier Führungseinheiten, die quer zu der Träger-Zustellrichtung voneinander beabstandet sind, ergibt sich für die Führung des Fördermittelspanners eine breite Basis.

Gefördert wird die Führungsgenauigkeit des Fördermittelspanners durch die in weiterer Ausgestaltung der Erfindung vorgesehene Gleichlaufregelung für die Führungseinheiten des mit dem Fördermittelspanner versehenen Trägers (Patentanspruch 6). Die erfindungsgemäße Gleichlaufregelung stellt sicher, dass sich beide Führungseinheiten des Trägers bei der Spannbewegung des Fördermittelspanners einheitlich in der Träger-Zustellrichtung bewegen.

Maßnahmen, die in bevorzugter Ausgestaltung der Erfindung eine funktionssichere Gleichlaufregelung mit konstruktiv einfachen Mitteln ermöglichen, ergeben sich aus den abhängigen Patentansprüchen 7 und 8.

Ebenfalls im Interesse eines konstruktiv einfachen und funktionssicheren Aufbaus der Gesamtanordnung ist im Falle der Erfindungsbauart nach Patentanspruch 9 als Rückstellsperre ein Zahngesperre vorgesehen.

Nachstehend wird die Erfindung anhand beispielhafter schematischer Darstellungen näher erläutert. Es zeigen:
- Fig. 1: eine Teildarstellung einer Fördervorrichtung mit einem spannbaren Fördermittel sowie einem Fördermittelan- trieb,
- Fig. 2: die Anordnung gemäß Figur 1 ohne Fördermittel und ohne Fördermittelantrieb,
- Fig. 3: die Anordnung gemäß Figur 1 ohne Fördermittelantrieb in der Ansicht in Richtung des Pfeils III in Figur 1,
- Fig. 4: die Anordnung gemäß Figur 2 in der Ansicht in Richtung des Pfeils IV in Figur 2,
- Fig. 5: die Anordnung gemäß Figur 2 in der Ansicht in Richtung des Pfeils V in Figur 2 und
- Fign. 6a, 6b, 6c: stark schematisierte Darstellungen zur Veranschauli- chung der Abläufe beim Spannen des Fördermittels der Fördervorrichtung gemäß den Figuren 1 bis 5.

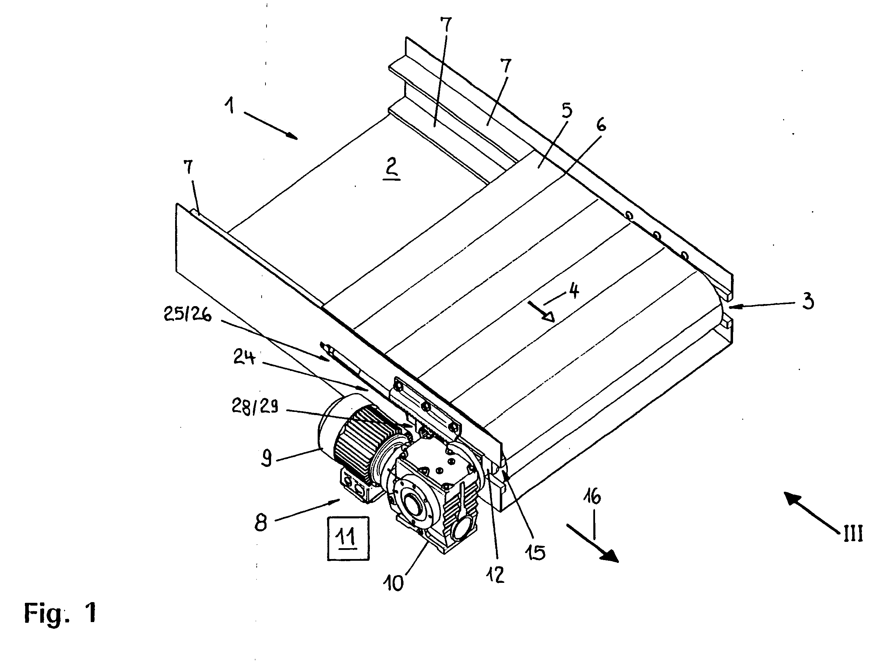

Gemäß Figur 1 umfasst eine Fördervorrichtung 1 eine im Querschnitt U-förmige Tragstruktur 2, an welcher ein endloses Fördermittel 3 in einer durch einen Pfeil 4 symbolisierten Bewegungsrichtung umläuft. Die Fördervorrichtung 1 kann beispielsweise an Laserschneidmaschinen zur Abförderung von Schneidabfall eingesetzt werden.

Bei dem Fördermittel 3 handelt es sich in dem dargestellten Beispielsfall um ein Scharnierband üblicher Bauart. In Figur 1 angedeutete Plattenelemente 5 sind um Scharnierachsen 6 relativ zueinander schwenkbeweglich. Auf in den Abbildungen nicht erkennbaren Verlängerungen der Scharnierachsen 6, die gegenüber dem Fördermittel 3 seitlich überstehen, sind nicht gezeigte Rollen drehbar gelagert. In der nachstehend noch näher beschriebenen Art und Weise wird das fördermittel 3 über die genannten Rollen bei Förderbetrieb in der Bewegungsrichtung 4 angetrieben. Bei seiner Bewegung ist das Fördermittel 3 auf Führungsleisten 7 gelagert, die ihrerseits an der Tragstruktur 2 der Fördervorrichtung 1 angebracht sind.

Ein als Drehantrieb ausgeführter Fördermittelantrieb 8 umfasst einen in seiner Drehrichtung umsteuerbaren elektrischen Antriebsmotor 9 sowie ein Getriebe 10. Zur Steuerung des Antriebsmotors 9 dient eine in Figur 1 andeutungsweise dargestellte numerische Motorsteuerung 11, die in die CNC-Steuerung derjenigen Maschine integriert werden kann, an welcher die Fördervorrichtung 1 eingesetzt wird.

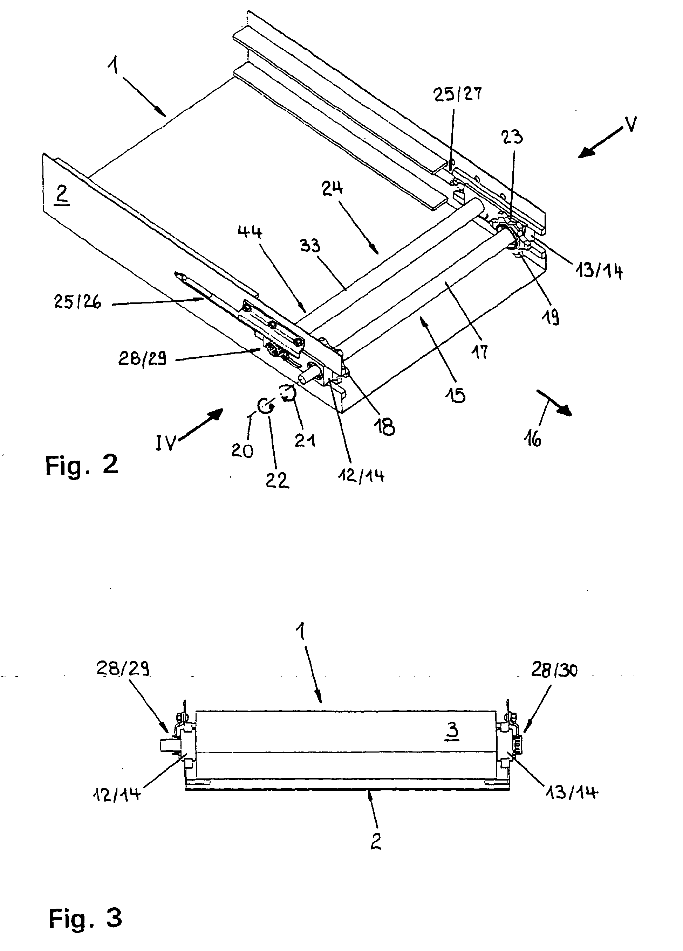

Gemeinsam sind der Antriebsmotor 9 und das Getriebe 10 der Fördervorrichtung 1 an einen Schlitten 12 angeflanscht. Wie im Einzelnen aus Figur 2 hervorgeht, liegt dem Schlitten 12 an der Tragstruktur 2 ein weiterer Schlitten 13 gegenüber. Gemeinsam bilden die Schlitten 12, 13 einen Träger 14 für einen Fördermittelspanner 15.

Die Schlitten 12, 13 sind an der Tragstruktur 2 der Fördervorrichtung 1 in einer Träger-Zustellrichtung 16 geführt und schwimmend gelagert. Insofern fungieren die Schlitten 12, 13 als Führungseinheiten des Trägers 14.

Der Fördermittelspanner 15 umfasst eine Antriebswelle 17 sowie darauf aufsitzende sternförmige Zahnräder 18, 19 (Figur 2). Er dient als rotierendes Umlenkelement und wird durch den Fördermittelantrieb 8 um eine Drehachse 20 angetrieben. Dabei sind einander entgegengesetzte Drehrichtungen 21, 22 möglich. Bei seiner Drehbewegung um die Drehachse 20 nimmt der Fördermittelspanner 15 in Zahnzwischenräumen 23 der Zahnräder 18, 19 die vorstehend erwähnten Rollen an den seitlichen Verlängerungen der Scharnierachsen 6 an dem Fördermittel 3 auf. Der Fördermittelspanner 15 treibt dadurch das Fördermittel 3 bei regulärem Betrieb in der Bewegungsrichtung 4 an und lenkt gleichzeitig das Fördermittel 3 um 180° um.

Außerdem ist der Fördermittelspanner 15 Teil einer Spannvorrichtung 24, mittels derer das Fördermittel 3 selbsttätig gespannt wird. Zu diesem Zweck wird der über den Träger 14 in Richtung auf das Fördermittel 3 schwimmend gelagerte Fördermittelspanner 15 mittels einer Zustellvorrichtung 25 in Richtung seiner schwimmenden Lagerung an der Tragstruktur 2 der Fördervorrichtung 1, d.h. in der Träger-Zustellrichtung 16 zugestellt. Die Zustellvorrichtung 25 umfasst zwei Gasdruckfedern 26, 27, die einerseits an der Tragstruktur 2 der Fördervorrichtung 1 abgestützt sind und die andererseits an dem Schlitten 12 bzw. an dem Schlitten 13 angreifen. Dabei sind die Gasdruckfedern 26, 27 gegen die Schlitten 12, 13 vorgespannt. Die von den Gasdruckfedern 26, 27 auf die Schlitten 12, 13 ausgeübte Vorspannkraft ist erheblich kleiner als die bei Förderbetrieb der Fördervorrichtung 1 von dem Fördermittel 3 in Gegenrichtung auf den Fördermittelspanner 15 und über diesen auf die Schlitten 12, 13 ausgeübte Betriebskraft.

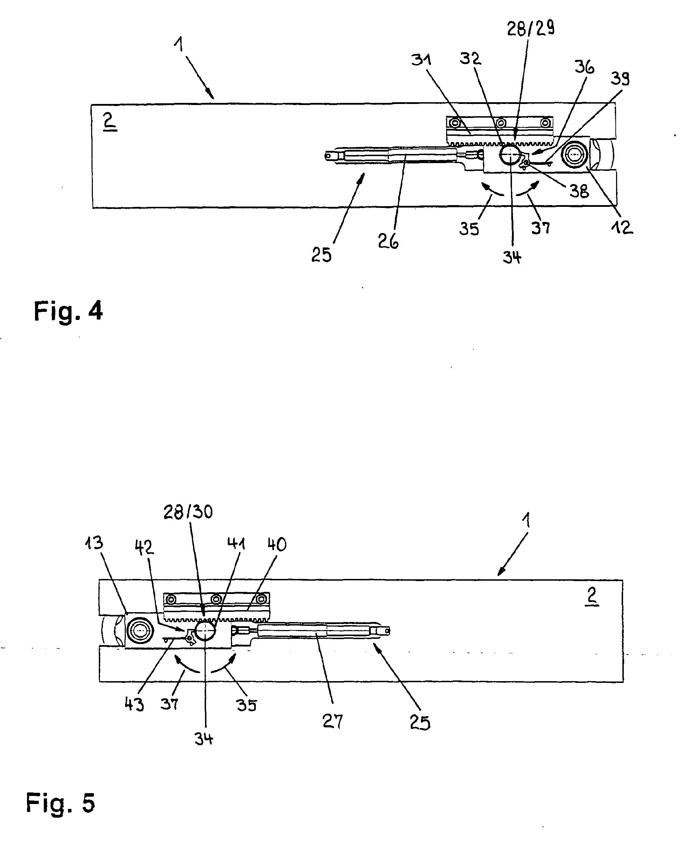

Eine entgegen der Träger-Zustellrichtung 16 gerichtete Rückstellbewegung des Fördermittelspanners 15 bzw. der Schlitten 12, 13 unter der Wirkung der Betriebskraft wird verhindert durch eine Rückstellsperre 28. Diese ist als Zahngesperre ausgeführt und umfasst zwei Gesperreeinheiten 29, 30 von denen jede an einem der Schenkel der U-förmigen Tragstruktur 2 der Fördervorrichtung 1 vorgesehen ist (Figur 3). Im Einzelnen ergibt sich der Aufbau der Rückstellsperre 28 bzw. der Gesperreeinheiten 29, 30 aus den Figuren 4 und 5.

Demnach umfasst die Gesperreeinheit 29 (Figur 4) ein verzahntes Eingriffselement 31, das an dem in Figur 1 unteren Schenkel der Tragstruktur 2 der Fördervorrichtung 1 befestigt ist. Die Zähne des verzahnten Eingriffselementes 31 greifen in schlitzartige Öffnungen eines ein Sperrrad bildenden Eingriffselementes 32 ein, das an dem betreffenden Ende einer Gleichlaufwelle 33 ausgebildet ist. Die Gleichlaufwelle 33 und damit auch das Eingriffselement 32 ist an dem Schlitten 12 des Trägers 14 um eine Wellen-Drehachse 34 drehbar gelagert. In einer Drehrichtung 35 können das Eingriffselement 32 und die Gleichlaufwelle 33 durch eine Sperrklinke 36 der Gesperreeinheit 29 blockiert werden. In einer Drehrichtung 37 lässt die Sperrklinke 36 eine Drehbewegung von Eingriffselement 32 und Gleichlaufwelle 33 zu. Die Sperrklinke 36 ist um eine Schwenkachse 38 schwenkbar an dem Schlitten 12 gelagert. Durch eine Feder 39 wird die Sperrklinke 36 in Richtung auf das Eingriffselement 32 beaufschlagt.

Die Gesperreeinheit 30 (Figur 5) an dem in Figur 1 oberen Schenkel der Tragstruktur 2 der Fördervorrichtung 1 stimmt in ihrem Aufbau und in ihrer Funktionsweise mit der Gesperreeinheit 29 überein. Die Gesperreeinheit 30 umfasst dementsprechend ein tragstrukturfestes verzahntes Eingriffselement 40, ein an dem betreffenden Ende der Gleichlaufwelle 33 ausgebildetes und als Sperrrad fungierendes Eingriffselement 41 mit schlitzartigen Öffnungen sowie eine an dem Schlitten 13 schwenkbar gelagerte Sperrklinke 42, die durch eine Feder 43 gegen das Eingriffselement 41 beaufschlagt wird. In der Drehrichtung 35 kann die Gleichlaufwelle 33 von der Sperrklinke 42 blockiert werden; in der Drehrichtung 37 lässt die Sperrklinke 42 eine Drehbewegung der Gleichlaufwelle 33 um die Wellen-Drehachse 34 zu.

Das verzahnte Eingriffselement 31 der Gesperreeinheit 29 und das verzahnte Eingriffselement 40 der Gesperreeinheit 30 sind in der Träger-Zustellrichtung 16 um einen halben Zahn gegeneinander versetzt. Ein entsprechender Versatz ist an der Gleichlaufwelle 33 zwischen den schlitzartigen Öffnungen des Eingriffselementes 32 und den schlitzartigen Öffnungen des Eingriffselementes 41 vorgesehen. Infolgedessen greift immer nur eine der Sperrklinken 36, 42 in eine schlitzartige Öffnung des zugeordneten Eingriffselementes 32, 41 ein, während die jeweils andere Sperrklinke 36, 42 im Übergangsbereich zwischen einander in Drehrichtung der Gleichlaufwelle 33 benachbarten schlitzartigen Öffnungen an dem betreffenden Eingriffselement 32, 41 anliegt.

Die Gleichlaufwelle 33 ist im Übrigen auch Teil einer Gleichlaufregelung 44, die dafür sorgt, dass sich die Schlitten 12, 13 unter der Wirkung der Gasdruckfedern 26, 27 mit einem Gleichlauf in der Richtung 16 ihrer schwimmenden Lagerung bewegen. Die Gleichlaufwelle 33 dient als Gleichlauf-Steuerelement. Das verzahnte Eingriffselement 31 und das Eingriffselement 32 mit seinen schlitzartigen Öffnungen sowie der Verzahnungseingriff zwischen den beiden genannten Elementen bilden eine Einrichtung zur Aufnahme der Bewegung des Schlittens 12 in der Träger-Zustellrichtung 16. Eine entsprechende Funktion für den Schlitten 13 übernehmen das verzahnte Eingriffselement 40 und das Eingriffselement 41 bzw. deren Verzahnungseingriff.

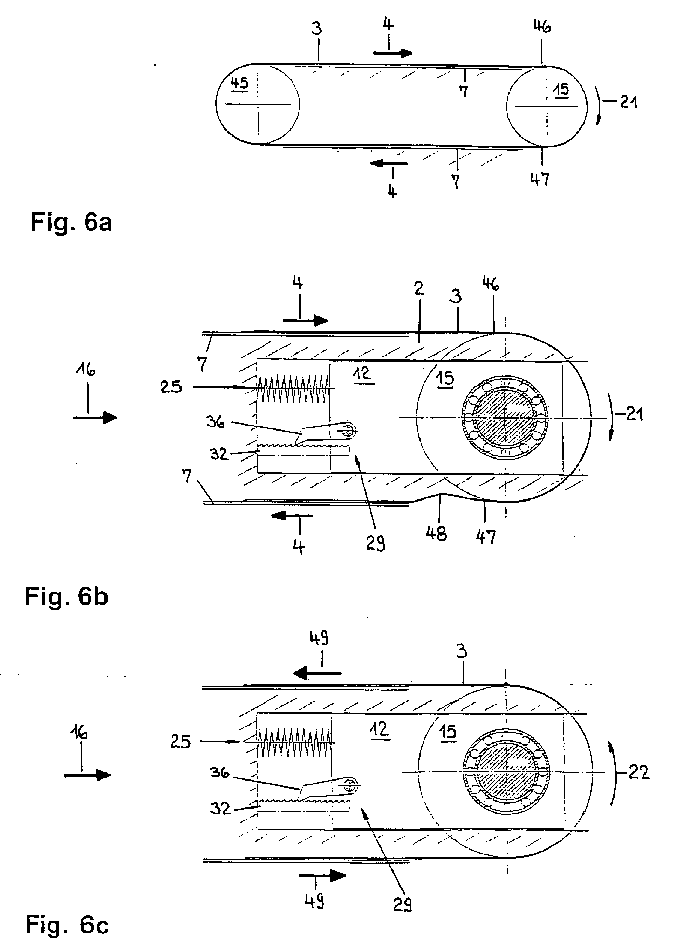

Die Abläufe beim Nachspannen des Fördermittels 3 stellen sich anhand der Prinzipdarstellungen 6a, 6b, 6c wie folgt dar:
Gemäß Figur 6a ist das endlose Fördermittel 3 über den in der Drehrichtung 21 drehangetriebenen Fördermittelspanner 15 sowie über ein mitlaufendes rotierendes Umlenkelement 45 geführt. Aufgrund einer entsprechenden Drehrichtung des Fördermittelantriebes 8 läuft das Fördermittel 3 in der Bewegungsrichtung 4 um.
An einer Auflaufseite 46 des angetriebenen Fördermittelspanners 15 wird das Fördermittel 3 dementsprechend auf Zug beansprucht; an einer Ablaufseite 47 des angetriebenen Fördermittelspanners 15 wird das Fördermittel 3 in Bewegungsrichtung 4 geschoben. Sowohl das Obertrum als auch das Untertrum des Fördermittel 3 bewegt sich über die Führungsleisten 7 an der Tragstruktur 2 der Fördervorrichtung 1.

Insbesondere aufgrund des Bewegungswiderstandes, welchen die Führungsleisten 7 an dem Untertrum des Fördermittels 3 reibungsbedingt der Bewegung des Fördermittels 3 in Bewegungsrichtung 4 entgegensetzen, bildet sich an der Ablaufseite 47 des Fördermittelspanners 15 eine Wellung 48 des Fördermittels 3, wie sie in Figur 6b dargestellt ist. Ebenso wie Figur 6c zeigt Figur 6b die Verhältnisse an der mit dem Fördermittelantrieb 8 versehenen Seite der Tragstruktur 2 des Fördermittels 3.

In der momentanen Position in der Richtung 16 seiner schwimmenden Lagerung ist der Fördermittelspanner 15 über die Gesperreeinheit 30 an der gegenüberliegenden Seite der Tragstruktur 2 der Fördervorrichtung 1 gegen eine Rückstellbewegung entgegen der Träger-Zustellrichtung 16 gesichert. Die Sperrklinke 42 der Gesperreeinheit 30 greift in eine schlitzartige Öffnung des Eingriffselementes 41 an der Gleichlaufwelle 33 ein und blockiert dadurch die Gleichlaufwelle 33 in der Drehrichtung 35. Über das in die schlitzartigen Öffnungen an der blockierten Gleichlaufwelle 33 eingreifende verzahnte Eingriffselement 40 wird der Schlitten 13 gegen eine Rückstellbewegung entgegen der Träger-Zustellrichtung 16 gesperrt. Gemeinsam mit dem Schlitten 13 ist der mit diesem über die Gleichlaufwelle 33 gekoppelte Schlitten 12 gegen eine Rückstellbewegung entgegen der Träger-Zustellrichtung 16 blockiert. Die von dem umlaufenden Fördermittel 3 auf den Fördermittelspanner 15 entgegen der Träger-Zustellrichtung 16 ausgeübte Betriebskraft ist folglich nicht im Stande, den Fördermittelspanner 15 entgegen der Träger-Zustellrichtung 16 zu verlagern. Gleichzeitig werden über die Gesperreeinheit 30 Erschütterungen in die Tragstruktur 2 der Fördervorrichtung 1 abgetragen, die bei der Bewegung des Fördermittels 3 über den Fördermittelspanner 15 in diesen eingeleitet werden und die ihre Ursache beispielsweise darin haben, dass die Plattenelemente 5 des als Gliederband ausgeführten Fördermittels 3 beim Passieren des Fördermittelspanners 15 Schwenkbewegungen um die Scharnierachsen 6 ausführen.

Der Funktionszustand der Gesperreeinheit 29 an dem Schlitten 12 des Trägers 14 ist in Figur 6b dargestellt. Die Sperrklinke 36 der Gesperreeinheit 29 befindet sich dementsprechend nicht in einem sperrenden Eingriff mit dem Eingriffselement 32 an der Gleichlaufwelle 33 sondern liegt vielmehr in einem Übergangsbereich zwischen zwei schlitzartigen Öffnungen an dem Eingriffselement 32 an. Die Zustellvorrichtung 25, im Einzelnen deren Gasdruckfedern 26, 27, beaufschlagt die Schlitten 12, 13 in der Träger-Zustellrichtung 16 mit einer Kraft, die wesentlich kleiner ist, als die von dem angetriebenen Fördermittel 3 in Gegenrichtung ausgeübte Betriebskraft.

Wird ausgehend von diesen Verhältnissen die Antriebs-Drehrichtung des Fördermittelspanners 15 umgekehrt, läuft der Fördermittelspanner 15 also in der Drehrichtung 22 und das Fördermittel 3 in einer Bewegungsrichtung 49 um, so bewirkt die Wellung 48 an dem Fördermittel 3, dass der in der Träger-Zustellrichtung 16 schwimmend gelagerte Fördermittelspanner 15 von der durch das Fördermittel 3 zuvor entgegen der Träger-Zustellrichtung 16 ausgeübten Betriebskraft entlastet wird und sich unter Abrollen an der Unterseite des Fördermittels 3 in der Träger-Zustellrichtung 16 bewegen kann, bis die Wellung 48 des Fördermittels 3 geglättet und damit das Fördermittel 3 nachgespannt ist. Die beschriebene Bewegung des Fördermittelspanners 15 in der Träger-Zustellrichtung 16 unterstützt die in dieser Richtung wirksame Zustellvorrichtung 25. Dabei ist von der Zustellvorrichtung 25 nur eine geringe Kraft in der Träger-Zustellrichtung 16 auszuüben. Die Gesperreeinheiten 29, 30 lassen die Bewegung des Fördermittelspanners 15 zu.

Mit der Spannbewegung des Fördermittelspanners 15 in der Träger-Zustellrichtung 16 geht eine gleichgerichtete Verlagerung der Schlitten 12, 13 des Trägers 14 einher. Die Gleichlaufregelung 44 sorgt dafür, dass sich die Schlitten 12, 13 mit dem daran gelagerten Fördermittelspanner 15 mit einem Gleichlauf in der Träger-Zustellrichtung 16 bewegen. Dadurch werden ein Verkanten der Schlitten 12, 13 an der Tragstruktur 2 der Fördervorrichtung 1 und insbesondere eine unerwünschte Schiefstellung des Fördermittelspanners 15 vermieden.

Ist die Wellung 48 an dem Fördermittel 3 geglättet, so hat der Schlitten 12 in der Träger-Zustellrichtung 16 eine Position erreicht, bei welcher die Sperrklinke 36 der Gesperreeinheit 29 unter der Wirkung der Feder 39 in eine schlitzartige Öffnung an dem zugeordneten Eingriffselement 32 eingedrückt ist. Dadurch blockiert nun die Gesperreeinheit 29 den Fördermittelspanner 15 gegen eine Rückstellbewegung in die Ausgangsposition der zuvor von dem Fördermittelspanner 15 ausgeführten Spannbewegung. An dem Schlitten 12 des Trägers 14 ergibt sich damit die in Figur 6c dargestellte Situation.

Aufgrund des in der Träger-Zustellrichtung 16 bestehenden gegenseitigen Versatzes des verzahnten Eingriffselementes 31 und des Eingriffselementes 32 einerseits sowie des verzahnten Eingriffselementes 40 und des Eingriffselementes 41 andererseits befindet sich die Sperrklinke 42 der Gesperreeinheit 30 in dem Übergangsbereich zwischen zwei einander benachbarten schlitzartigen Öffnungen an dem Eingriffselement 41. Der Funktionszustand der Gesperreeinheit 30 entspricht damit dem in Figur 6b gezeigten Funktionszustand der Gesperreeinheit 29. Bereits eine kurze Spannbewegung des Fördermittelspanners 15 reicht aus, damit die Gesperreeinheit 30 anstelle der Gesperreeinheit 29 in den Sperrzustand überführt wird.

Ist das Fördermittel 3 gespannt und der Fördermittelspanner 15 gegen eine unerwünschte Rückstellbewegung gesichert, so kann die Antriebs-Drehrichtung des Fördermittelspanners 15 erneut umgekehrt und dadurch das Fördermittel 3 wieder in seiner ursprünglichen Bewegungsrichtung 4 angetrieben werden.

Um permanent eine optimale Spannung des Fördermittels 3 sicherzustellen, können die vorstehend beschriebenen Abläufe in bestimmten Zeitabständen wiederholt werden. Die einzuhaltenden Zeitabstände lassen sich insbesondere empirisch ermitteln.

## Patentansprüche

1. Fördervorrichtung
• mit einem spannbaren Fördermittel (3), das angetrieben bewegbar ist,
• mit einer Spannvorrichtung (24) zum Spannen des Fördermittels (3), die einen Fördermittelspanner (15) sowie eine Zustellvorrichtung (25) hierfür umfasst, wobei der Fördermittelspanner (15) in Richtung auf das Fördermittel (3) schwimmend gelagert und zum Spannen des Fördermittels (3) mittels der Zustellvorrichtung (25) mit einer Spannbewegung in der Richtung (16) seiner schwimmenden Lagerung zustellbar ist sowie
• mit einer Rückstellsperre (28), mittels derer der Fördermittelspanner (15) gegen eine Bewegung in Gegenrichtung seiner schwimmenden Lagerung gesperrt ist,
**dadurch gekennzeichnet,**
• **dass** als Fördermittelspanner (15) ein um eine Drehachse (20) drehbares Rotationselement vorgesehen ist, das mittels eines schaltbaren Drehantriebes (8) oder mittels eines zur Drehrichtungsumkehr des Rotationselementes (15) steuerbaren Drehantriebes (8) um die Drehachse (20) angetrieben ist und das seinerseits das Fördermittel (3) an einer radialen Außenseite lagert und das Fördermittel (3) in dessen Bewegungsrichtung (4, 49) oder in einander entgegengesetzten Bewegungsrichtungen (4, 49) antreibt,
• **dass** das Rotationselement durch Stillsetzen des schaltbaren Drehantriebes (8) oder durch Drehrichtungsumkehr mittels des steuerbaren Drehantriebes (8) von einer Beaufschlagung durch das Fördermittel (3), welche einer Spannbewegung des Rotationselementes (15) entgegenwirkt, entlastet wird,
• **dass** das Rotationselement bei stillgesetztem Drehantrieb (8) oder bei Antrieb entgegen der anfänglichen Drehrichtung (21, 22) mittels der Zustellvorrichtung (25) mit einer Spannbewegung in der Richtung (16) seiner schwimmenden Lagerung zugestellt wird und
• **dass** das mit einer Spannbewegung zugestellte Rotationselement mittels der Rückstellsperre (28) gegen eine Rückstellbewegung in die Ausgangsposition der Spannbewegung gesperrt ist.

2. Fördervorrichtung nach Anspruch 1, **dadurch gekennzeichnet, dass** das als Fördermittelspanner (15) vorgesehene Rotationselement ein rotierendes Umlenkelement ausbildet, mittels dessen das zu spannende Fördermittel (3) umgelenkt ist.

3. Fördervorrichtung nach einem der vorhergehenden Ansprüche, **dadurch gekennzeichnet, dass** die Zustellvorrichtung (25) als Antriebsmittel für die Spannbewegung des Rotationselements wenigstens eine Druckfeder, vorzugsweise wenigstens eine Gasdruckfeder (26, 27), aufweist.

4. Fördervorrichtung nach einem der vorhergehenden Ansprüche, **dadurch gekennzeichnet, dass** das Rotationselement an einem Träger (14) angebracht ist, der an einer Tragstruktur (2) der Fördervorrichtung in einer der Richtung (16) der Spannbewegung des Rotationselements zugeordneten Träger-Zustellrichtung (16) geführt und schwimmend gelagert ist und der zur Ausführung einer Spannbewegung des Rotationselements mittels der Zustellvorrichtung (25) in der Träger-Zustellrichtung (16) zustellbar ist.

5. Fördervorrichtung nach einem der vorhergehenden Ansprüche, **dadurch gekennzeichnet, dass** der Träger (14) an der Tragstruktur (2) der Fördervorrichtung über zwei Führungseinheiten (12, 13) in der Träger-Zustellrichtung (16) geführt und schwimmend gelagert ist, wobei die Führungseinheiten (12, 13) quer zu der Träger-Zustellrichtung (16) voneinander beabstandet und mittels der Zustellvorrichtung (25) in der Träger-Zustellrichtung (16) zustellbar sind und dass für die Führungseinheiten (12, 13) des Trägers (14) eine Gleichlaufregelung (44) vorgesehen ist, mittels derer die von den beiden Führungseinheiten (12, 13) in der Träger-Zustellrichtung (16) ausgeführten Bewegungen im Sinne eines Gleichlaufs der Führungseinheiten (12, 13) vereinheitlichbar sind.

6. Fördervorrichtung nach einem der vorhergehenden Ansprüche, **dadurch gekennzeichnet, dass** die Gleichlaufregelung (44) für die Führungseinheiten (12, 13) des Trägers (14) für jede der Führungseinheiten (12, 13) eine Einrichtung (31, 32; 40, 41) zur Aufnahme der von der jeweiligen Führungseinheit (12, 13) in der Träger-Zustellrichtung (16) ausgeführten Bewegung aufweist und dass ein Gleichlauf-Steuerelement (33) vorgesehen ist, mittels dessen die aufgenommenen Bewegungen der beiden Führungseinheiten (12, 13) des Trägers (14) in der Träger-Zustellrichtung (16) im Sinne eines Gleichlaufs der Führungseinheiten (12, 13) vereinheitlichbar sind.

7. Fördervorrichtung nach einem der vorhergehenden Ansprüche, **dadurch gekennzeichnet, dass** als Gleichlauf-Steuerelement (33) eine Gleichlaufwelle vorgesehen ist, die an beiden Führungseinheiten (12, 13) des Trägers (14) drehbar gelagert ist und welche die beiden Führungseinheiten (12, 13) im Sinne eines Gleichlaufs bei ihrer Bewegung in der Träger-Zustellrichtung (16) steuert.

8. Fördervorrichtung nach einem der vorhergehenden Ansprüche, **dadurch gekennzeichnet, dass** für jede Führungseinheit (12, 13) des Trägers (14) als Einrichtung (31, 32; 40, 41) zur Aufnahme der von der jeweiligen Führungseinheit (12, 13) in der Träger-Zustellrichtung (16) ausgeführten Bewegung ein Verzahnungseingriff zwischen einem an der Gleichlaufwelle (33) vorgesehenen wellenfesten Eingriffselement (32, 41) und einem an der Tragstruktur (2) der Fördervorrichtung vorgesehenen tragstrukturfesten Eingriffselement (31, 40) vorgesehen ist.

9. Fördervorrichtung nach einem der vorhergehenden Ansprüche, **dadurch gekennzeichnet, dass** die Rückstellsperre (28) als Zahngesperre mit wenigstens einer Sperrklinke (36, 42) und wenigstens einem Sperrrad (32, 41) ausgebildet ist.

10. Verfahren zum Spannen eines spannbaren und angetrieben bewegbaren Fördermittels (3) einer Fördervorrichtung (1),
• wobei ein in Richtung auf das Fördermittel (3) schwimmend gelagerter Fördermittelspanner (15) zum Spannen des Fördermittels (3) mit einer Spannbewegung in der Richtung (16) seiner schwimmenden Lagerung zugestellt wird und
• wobei der Fördermittelspanner (15) gegen eine Bewegung entgegen der Richtung (16) seiner schwimmenden Lagerung gesperrt wird,
**dadurch gekennzeichnet,**
• **dass** als Fördermittelspanner (15) zum Spannen des Fördermittels (3) ein Rotationselement mit einer Spannbewegung zugestellt wird, das mittels eines schaltbaren Drehantriebes (8) um eine Drehachse (20) angetrieben ist und **dadurch** seinerseits das Fördermittel (3) in dessen Bewegungsrichtung (4, 49) antreibt oder das mittels eines steuerbaren Drehantriebes (8) wahlweise in einander entgegengesetzten Drehrichtungen (21, 22) um eine Drehachse (8) angetrieben ist und **dadurch** seinerseits das Fördermittel (3) in einander entgegengesetzten Bewegungsrichtungen (4, 49) antreibt,
• **dass** das Rotationselement von der einer Spannbewegung des Rotationselementes entgegenwirkenden Beaufschlagung durch das Fördermittel (3) entlastet wird, indem der schaltbare Drehantrieb (8) des Rotationselementes stillgesetzt oder indem die anfängliche Drehrichtung (21, 22) des Rotationselementes mittels des steuerbaren Drehantriebes (8) umgekehrt wird und
• **dass** das Rotationselement bei stillgesetztem Drehantrieb (8) oder bei Antrieb entgegen der anfänglichen Drehrichtung (21, 22) mit einer Spannbewegung in der Richtung (16) seiner schwimmenden Lagerung zugestellt wird.

11. Verfahren nach Anspruch 10, **dadurch gekennzeichnet, dass** als Rotationselement ein rotierendes Umlenkelement, welches das Fördermittel (3) umlenkt, zum Spannen des Fördermittels (3) mit einer Spannbewegung zugestellt wird.

## Claims

1. Conveyor device
• having a tensionable conveyor means (3) which is movable in a driven manner,
• having a tensioning device (24) which is for tensioning the conveyor means (3) and which comprises a conveyor means tensioner (15) and a positioning device (25) therefor, the conveyor means tensioner (15) being supported in a floating manner in the direction towards the conveyor means (3) and being positionable in order to tension the conveyor means (3) by means of the positioning device (25) with a tensioning movement in the direction (16) of the floating support thereof and
• having a return block (28), by means of which the conveyor means tensioner (15) is blocked to prevent movement in the counter-direction of the floating support thereof,
**characterised in that**
• there is provided as the conveyor means tensioner (15) a rotation element which can be rotated about an axis of rotation (20) and which is driven about the axis of rotation (20) by means of a switchable rotary drive (8) or by means of a rotary drive (8) which can be controlled in order to reverse the direction of rotation of the rotation element (15) and which itself supports the conveyor means (3) on a radial outer side and drives the conveyor means (3) in the direction of movement (4, 49) thereof or in mutually opposed directions of movement (4, 49),
• **in that** the rotation element is relieved from being acted on by the conveyor means (3) by the switchable rotary drive (8) being stopped or by reversal of the direction of rotation by means of the controllable rotary drive (8), which action is counter to tensioning movement of the rotation element (15),
• **in that** the rotation element is positioned by means of the positioning device (25) with a tensioning movement in the direction (16) of the floating support thereof when the rotary drive (8) is stopped or when being driven counter to the initial direction of rotation (21, 22) and
• **in that** the rotation element positioned with a tensioning movement is blocked by means of the return block (28) to prevent return movement into the initial position of the tensioning movement.

2. Conveyor device according to claim 1, **characterised in that** the rotation element provided as a conveyor means tensioner (15) constitutes a rotating redirecting element, by means of which the conveyor means (3) to be tensioned is redirected.

3. Conveyor device according to either of the preceding claims, **characterised in that** the positioning device (25) has at least one pressure spring, preferably at least one gas pressure spring (26, 27), as a drive means for the tensioning movement of the rotation element.

4. Conveyor device according to any one of the preceding claims, **characterised in that** the rotation element is fitted to a carrier (14) which is guided and supported in a floating manner on a carrier structure (2) of the conveyor device in a carrier positioning direction (16) which is associated with the direction (16) of the tensioning movement of the rotation element and which can be positioned in the carrier positioning direction (16) by means of the positioning device (25) in order to carry out a tensioning movement of the rotation element.

5. Conveyor device according to any one of the preceding claims, **characterised in that** the carrier (14) is guided and supported in a floating manner on the carrier structure (2) of the conveyor device by means of two guide units (12, 13) in the carrier positioning direction (16), the guide units (12, 13) being spaced apart from each other transversely relative to the carrier positioning direction (16) and being positionable in the carrier positioning direction (16) by means of the positioning device (25), and **in that** there is provided for the guide units (12, 13) of the carrier (14) a synchronisation control (44), by means of which the movements carried out by the two guide units (12, 13) in the carrier positioning direction (16) can be harmonized for synchronisation of the guide units (12, 13).

6. Conveyor device according to any one of the preceding claims, **characterised in that** the synchronisation control (44) for the guide units (12, 13) of the carrier (14) has for each of the guide units (12, 13) a device (31, 32; 40, 41) for receiving the movement carried out by the respective guide unit (12, 13) in the carrier positioning direction (16), and **in that** there is provided a synchronisation control element (33), by means of which the received movements of the two guide units (12, 13) of the carrier (14) in the carrier positioning direction (16) can be harmonized for synchronisation of the guide units (12, 13).

7. Conveyor device according to any one of the preceding claims, **characterised in that** there is provided as the synchronisation control element (33) a synchronisation shaft which is supported for rotation on both guide units (12, 13) of the carrier (14) and which controls the two guide units (12, 13) for synchronisation during the movement thereof in the carrier positioning direction (16).

8. Conveyor device according to any one of the preceding claims, **characterised in that** a toothed engagement between an engagement element (32, 41), which is provided on the synchronisation shaft (33) and which is fixed to the shaft, and an engagement element (31, 40) which is provided on the carrier structure (2) of the conveyor device and which is fixed to the carrier structure, is provided for each guide unit (12, 13) of the carrier (14) as a device (31, 32; 40, 41) for receiving the movement carried out by the respective guide unit (12, 13) in the carrier positioning direction (16).

9. Conveyor device according to any one of the preceding claims, **characterised in that** the return block (28) is in the form of a toothed ratchet mechanism having at least one pawl (36, 42) and at least one ratchet wheel (32, 41).

10. Method for tensioning a tensionable and drivingly movable conveyor means (3) of a conveyor device (1),
• a conveyor means tensioner (15) which is supported in a floating manner in the direction towards the conveyor means (3) being positioned, for tensioning the conveyor means (3), with a tensioning movement in the direction (16) of the floating support thereof and
• the conveyor means tensioner (15) being blocked to prevent movement counter to the direction (16) of the floating support thereof,
**characterised in that**
• a rotation element, which is driven by means of a switchable rotary drive (8) about an axis of rotation (20) and which thereby in turn drives the conveyor means (3) in the direction of movement (4, 49) thereof or which is optionally driven in mutually opposed directions of rotation (21, 22) about an axis of rotation (8) by means of a controllable rotary drive (8) and thereby in turn drives the conveyor means (3) in mutually opposed directions of movement (4, 49), is positioned with a tensioning movement as a conveyor means tensioner (15) for tensioning the conveyor means (3),
• **in that** the rotation element is relieved from the action by the conveyor means (3) acting counter to a tensioning movement of the rotation element **in that** the switchable rotary drive (8) of the rotation element is stopped or in that the initial direction of rotation (21, 22) of the rotation element is reversed by means of the controllable rotary drive (8) and
• **in that** the rotation element is positioned with a tensioning movement in the direction (16) of the floating support thereof when the rotary drive (8) is stopped or when being driven counter to the initial direction of rotation (21, 22).

11. Method according to claim 10, **characterised in that** a rotating redirecting element which redirects the conveyor means (3) is positioned as the rotation element in order to tension the conveyor means (3) with a tensioning movement.

## Revendications

1. Dispositif de convoyage, comprenant
- un moyen convoyeur (3), apte à être tendu et pouvant être mû par entraînement,
- un dispositif de tension (24), conçu pour tendre ledit moyen convoyeur (3) et comprenant un tendeur (15) dudit moyen convoyeur, ainsi qu'un dispositif d'ajustement (25) associé à ce dernier, ledit tendeur (15) du moyen convoyeur étant monté flottant en direction dudit moyen convoyeur (3) et pouvant être ajusté à l'aide dudit dispositif d'ajustement (25), en vue de tendre ledit moyen convoyeur (3), avec un mouvement de tension s'opérant dans la direction (16) de son flottage,
- ainsi qu'un verrou antirecul (28) ayant pour effet d'interdire un mouvement dudit tendeur (15) du moyen convoyeur, en sens inverse de la direction de son flottage,
**caractérisé par le fait**
- **qu'**un élément rotatif, prévu en tant que tendeur (15) du moyen convoyeur et apte à tourner autour d'un axe de rotation (20), est entraîné autour dudit axe de rotation (20) à l'aide d'un entraînement en rotation (8) commutable, ou à l'aide d'un entraînement en rotation (8) pouvant être commandé pour inverser la direction de rotation dudit élément rotatif (15), lequel assure, à son tour, le montage dudit moyen convoyeur (3) sur une face extérieure radiale, et entraîne ledit moyen convoyeur (3) dans la direction (4, 49) du mouvement de celui-ci, ou dans des directions (4, 49) de mouvements mutuellement opposés,
- **que** ledit élément rotatif est soulagé, par mise à l'arrêt dudit entraînement en rotation (8) commutable, ou par inversion de la direction de rotation à l'aide de l'entraînement en rotation (8) commandable, d'une sollicitation par ledit moyen convoyeur (3) agissant en opposition à un mouvement de tension dudit élément rotatif (15),
- **que**, lorsque ledit entraînement en rotation (8) est à l'arrêt, ou lors d'un entraînement en sens inverse de la direction de rotation initiale (21, 22), ledit élément rotatif est ajusté, à l'aide du dispositif d'ajustement (25), avec un mouvement de tension s'effectuant dans la direction (16) de son flottage, et
- **que** ledit élément rotatif, ajusté avec un mouvement de tension, est bloqué à l'aide du verrou antirecul (28) lui interdisant un mouvement de rappel vers l'emplacement initial dudit mouvement de tension.

2. Dispositif de convoyage selon la revendication 1, **caractérisé par le fait que** l'élément rotatif, prévu en tant que tendeur (15) du moyen convoyeur, se présente comme un élément rotatif de déviation ayant pour effet de dévier ledit moyen convoyeur (3), devant être tendu.

3. Dispositif de convoyage selon l'une des revendications précédentes, **caractérisé par le fait que** le dispositif d'ajustement (25) comporte, en tant que moyen d'entraînement dédié au mouvement de tension de l'élément rotatif, au moins un ressort de pression et, de préférence, au moins un ressort (26, 27) à pression gazeuse.

4. Dispositif de convoyage selon l'une des revendications précédentes, **caractérisé par le fait que** l'élément rotatif est implanté sur un support (14) qui est guidé et flottant sur une structure porteuse (2) dudit dispositif de convoyage, dans une direction (16) d'ajustement dudit support assignée à la direction (16) du mouvement de tension dudit élément rotatif, et qui peut être ajusté dans ladite direction (16) d'ajustement dudit support, à l'aide du dispositif d'ajustement (25), en vue de l'exécution d'un mouvement de tension dudit élément rotatif.

5. Dispositif de convoyage selon l'une des revendications précédentes, **caractérisé par le fait que** le support (14) est guidé et flottant, par l'intermédiaire de deux unités de guidage (12, 13), dans la direction (16) d'ajustement dudit support sur la structure porteuse (2) dudit dispositif de convoyage, lesdites unités de guidage (12, 13) étant distantes l'une de l'autre transversalement par rapport à ladite direction (16) d'ajustement du support et pouvant être ajustées dans ladite direction (16) d'ajustement dudit support, à l'aide du dispositif d'ajustement (25) ; et **par le fait que** lesdites unités (12, 13) de guidage dudit support (14) sont équipées d'une régulation de synchronisme (44) à l'aide de laquelle les mouvements, effectués par les deux unités de guidage (12, 13) dans la direction (16) d'ajustement dudit support, peuvent être uniformisés dans le sens d'un fonctionnement synchrone desdites unités de guidage (12, 13).

6. Dispositif de convoyage selon l'une des revendications précédentes, **caractérisé par le fait que** la régulation de synchronisme (44) dédiée aux unités (12, 13) de guidage du support (14) présente, pour chacune desdites unités de guidage (12, 13), un système (31, 32 ; 40, 41) conçu pour recevoir le mouvement effectué, par l'unité de guidage (12, 13) considérée, dans la direction (16) d'ajustement dudit support ; et par la présence d'un élément (33) de commande du synchronisme à l'aide duquel les mouvements reçus, effectués par les deux unités (12, 13) de guidage du support (14) dans la direction (16) d'ajustement dudit support, peuvent être uniformisés dans le sens d'un fonctionnement synchrone desdites unités de guidage (12, 13).

7. Dispositif de convoyage selon l'une des revendications précédentes, **caractérisé par le fait qu'**un arbre de synchronisation, prévu en tant qu'élément (33) de commande du synchronisme, est monté à rotation sur les deux unités (12, 13) de guidage du support (14) et commande les deux unités de guidage (12, 13), dans le sens d'un fonctionnement synchrone, au cours de leur mouvement dans la direction (16) d'ajustement dudit support.

8. Dispositif de convoyage selon l'une des revendications précédentes, **caractérisé par** la présence pour chaque unité (12, 13) de guidage du support (14), en tant que système (31, 32 ; 40, 41) conçu pour recevoir le mouvement effectué par l'unité de guidage (12, 13) considérée, dans la direction (16) d'ajustement dudit support, d'un système de coopération par engrènement entre un élément (32, 41) de venue en prise, prévu sur l'arbre de synchronisation (33) avec lequel il fait corps, et un élément (31, 40) de venue en prise qui est prévu sur la structure porteuse (2) dudit dispositif de convoyage, et fait corps avec ladite structure porteuse.

9. Dispositif de convoyage selon l'une des revendications précédentes, **caractérisé par le fait que** le verrou antirecul (38) est réalisé sous la forme d'un système d'arrêt à déclic, comprenant au moins un cliquet de blocage (36, 42) et au moins une roue de blocage (32, 41).

10. Procédé de tension d'un moyen convoyeur (3) d'un dispositif de convoyage (1), apte à être tendu et pouvant être mû par entraînement,
- un tendeur (15) dudit moyen convoyeur, monté flottant en direction dudit moyen convoyeur (3), étant ajusté en vue de tendre ledit moyen convoyeur (3), avec un mouvement de tension s'opérant dans la direction (16) de son flottage, et
- un mouvement dudit tendeur (15) du moyen convoyeur étant interdit en sens inverse de la direction (16) de son flottage,
**caractérisé par le fait**
- **que** le tendeur (15) du moyen convoyeur, conçu pour tendre ledit moyen convoyeur (3), se présente comme un élément rotatif qui est ajusté avec un mouvement de tension et est entraîné autour d'un axe de rotation (20), à l'aide d'un entraînement en rotation (8) commutable, et entraîne ainsi à son tour ledit moyen convoyeur (3) dans la direction (4, 49) du mouvement de ce dernier ; ou bien est sélectivement entraîné autour d'un axe de rotation (8) à l'aide d'un entraînement en rotation (9) commandable, dans des directions de rotation (21, 22) mutuellement opposées, et entraîne ainsi à son tour ledit moyen convoyeur (3) dans des directions (4, 49) de mouvements mutuellement opposés,
- **que** ledit élément rotatif est soulagé d'une sollicitation par ledit moyen convoyeur (3), agissant en opposition à un mouvement de tension dudit élément rotatif, suite à une mise à l'arrêt dudit entraînement en rotation (8) commutable associé audit élément rotatif, ou bien suite à une inversion de la direction de rotation initiale (21, 22) dudit élément rotatif, à l'aide dudit entraînement en rotation (8) commandable, et
- **que**, lorsque ledit entraînement en rotation (8) est à l'arrêt, ou lors d'un entraînement en sens inverse de ladite direction de rotation initiale (21, 22), ledit élément rotatif est ajusté avec un mouvement de tension s'effectuant dans la direction (16) de son flottage.

11. Procédé selon la revendication 10, **caractérisé par le fait qu'**un élément rotatif de déviation, prévu en tant qu'élément rotatif et déviant le moyen convoyeur (3), est ajusté avec un mouvement de tension en vue de tendre ledit moyen convoyeur (3).
